# NEUE EUROPÄISCHE PATENTSCHRIFT

(11) **EP 0 591 163 B2**
(45) Veröffentlichungstag und Bekanntmachung des Hinweises auf die Entscheidung über den Einspruch: **11.08.1999**
(45) Hinweis auf die Patenterteilung: 04.01.1995
(21) Anmeldenummer: 91903688.9
(22) Anmeldetag: 06.02.1991
(51) Int. Cl.: F01K 23/10

(54) **KOMBINIERTE GAS- UND DAMPFTURBINENANLAGE**
COMBINED GAS AND STEAM TURBINE PLANT
INSTALLATION COMBINEE A TURBINES A GAZ ET A VAPEUR

(30) Priorität: 21.09.1990 DE 4029991
(43) Veröffentlichungstag der Anmeldung: 13.04.1994
(73) Patentinhaber: SIEMENS AKTIENGESELLSCHAFT, 80333 München (DE)
(72) Erfinder: BRÜCKNER, Hermann, D-8521 Uttenreuth (DE); SCHMID, Erich, D-8525 Marloffstein (DE)
(86) Internationale Anmeldenummer: DE9100096
(87) Internationale Veröffentlichungsnummer: WO9205344

(56) Entgegenhaltungen:
- CH-A- 621 186
- DE-A- 2 161 549
- FR-A- 1 134 503
- FR-A- 2 030 500
- FR-A- 2 107 449
- A.Aerni, R. Kehlhofer und H. Kotschenreuther: "Steigerung der Wirtschaftlichkeit von konventionellen Dampfkraftwerken durch Umbau zu Kombi-Anlagen", VGB Kraftwerkstechnik, 67.Jahrgang, Heft 3, März 1987, Seiten 209-215

## Beschreibung

Die Erfindung betrifft eine kombinierte Gas- und Dampfturbinenanlage genäß dem Oberbegriff des Anspruchs 1. Eine derartige Anlage ist aus dem Aufsatz A. Aerni et al., "Steigerung der Wirtschaftlichkeit von konventionellen Dampfkraftanlagen durch Umbau zu Kombi-Anlagen", VGB Kraftwerkstechnik, 67. Jahrgang, Heft 32, März 1987, Seiten 209 bis 213, bekannt.

Bei einer z.B. aus der FR-A-2 030 500 bekannten kombinierten Gas- und Dampfturbinenanlage (GuD-Anlage) mit einem Dampferzeuger, der eine Feuerungsanlage umfaßt, werden üblicherweise die Abgase der Gasturbine als Verbrennungsluft für die Feuerungsanlage verwendet. Dabei sind die Leistungen der Dampfturbine und der Gasturbine sowie des Dampferzeugers voneinander abhängig, so daß sie bei einer Auslegung einer derartigen Anlage aufeinander abgestimmt werden müssen.

Die Abstimmung erfolgt dabei üblicherweise derart, daß bei Nennlastbetrieb der Sauerstoffbedarf der Feuerungsanlage durch die Abgase der Gasturbine gedeckt werden kann. Es werden allerdings Gasturbinen mit nur wenigen unterschiedlichen Leistungsgrößen, beispielsweise mit 50 MW, 150 MW oder 200 MW, hergestellt und angeboten, so daß deren Anpassung an die Leistung der Dampfturbine und die des Dampferzeugers äußerst schwierig ist.

Bei einer vorgegebenen Anlagengröße liefert daher die Gasturbine - im Vergleich zur benötigten Abgasmenge für die Feuerungsanlage im Vollastbereich - entweder eine zu große oder eine zu kleine Abgasmenge. Bei einer zu kleinen Abgasmenge ist im Vollastbereich nur ein geringer Wirkungsgrad der Anlage zu erreichen, der allerdings im Teillastbereich besser wird. In diesem Fall wird der fehlende Sauerstoff für die Feuerungsanlage dann üblicherweise über ein zusätzliches Frischluftgebläse bereitgestellt.

Dagegen muß bei einer zu großen Abgasmenge im Teillastbereich schon zu einem relativ frühen Zeitpunkt die Leistung der Gasturbine reduziert werden. Dies wird üblicherweise bei modernen Gasturbinen durch eine Verstellung der Leitschaufeln der Gasturbine erreicht, so daß der Luftdurchsatz durch die Gasturbine vermindert wird. Mit einer zunehmenden Reduzierung der Leistung der Gasturbine nimmt allerdings der Wirkungsgrad der Anlage im Teillastbereich ab. Mit anderen Worten: In beiden Fällen ist der erzielte Gesamtwirkungsgrad nur begrenzt.

Der Erfindung liegt daher die Aufgabe zugrunde, bei einer kombinierten Gas- und Dampfturbinenanlage bei allen Betriebszuständen, also auch im Vollast- und im Teillastbereich, einen möglichst hohen Gesamtwirkungsgrad zu erreichen.

Diese Aufgabe wird erfindungsgemäß dadruch gelöst, daß die Mitteldruck-Heizeinrichtung ausgangsseitig in die Zwischenüberhitzer-Einrichtung mündet. Dadurch wird bei einer Abgasmenge aus der Gasturbine auch im Teillastbereich ein hoher Wirkungsgrad erreicht, so daß ein hoher Gesamtwirkungsgrad der Anlage erzielt wird.

Gemäß einer vorteilhaften Weiterbildung der erfindungsgemäßen Anlage ist die Mitteldruck-Heizeinrichtung parallel zur Hintereinanderschaltung aus der Vorwärmeinrichtung und der Hochdruck-Heizeinrichtung sowie eines Hochdruckteils der Dampfturbine geschaltet. Um den in der Mitteldruck-Heizeinrichtung erforderlichen Druck aufzubauen und zu halten, ist zweckmäßig in einer Zuströmleitung der Mitteldruck-Heizeinrichtung eine Pumpe vorgesehen.

Um zusätzlich Wärme aus dem Dampferzeuger für einen Mitteldruckteil der Dampfturbine zu gewinnen, kann der Hochdruckstufe der Dampfturbine eine Zwischenüberhitzer-Einrichtung nachgeschaltet sein.

Zur Schaffung eines Dampfprozesses mit hohem Dampfdruck und mit hoher Temperatur ist vorteilhafterweise mindestens ein Teil der Abgase aus der Gasturbine unter Umgehung der Feuerungsanlage direkt in den Dampferzeuger einleitbar. Der genannte Teil der Abgase kann dabei in zwei Teilströme aufgeteilt sein. Dabei sollte - in Strömungsrichtung der Rauchgase gesehen - ein erster Teilstrom örtlich nach der Zwischenüberhitzer-Einrichtung und ein zweiter Teilstrom örtlich vor der Zwischenüberhitzer-Einrichtung in den Dampferzeuger einleitbar sein. Die Zwischenüberhitzer-Einrichtung kann aber auch eine Vorwärmstufe und eine dieser nachgeschaltete Endüberhitzerstufe umfassen, so daß der zweite Teilstrom zwischen die Vorwärmstufe und die Endüberhitzerstufe einleitbar ist.

Dadurch kann ohne Verminderung der Leistung der Gasturbine die in den Abgasen enthaltene Wärme auch im Teillastbereich der Anlage ausgenutzt und für den Dampfprozeß herangezogen werden, so daß ein hoher Wirkungsgrad des Dampfprozesses erreicht werden kann. Durch eine gesteuerte oder geregelte Verteilung der im Teillastbereich überschüssigen Abgase aus der Gasturbine auf die beiden Teilströme kann darüber hinaus eine zusätzliche Kühleinrichtung für die Zwischenüberhitzer-Einrichtung eingespart werden. Dieses wirkt sich besonders günstig auf den Gesamtwirkungsgrad der Anlage aus.

Gemäß einer vorteilhaften Ausgestaltung der erfindungsgemäßen Anlage ist diese so ausgebildet, daß die Vorwärmeinrichtung eine Parallelschaltung aus einem innerhalb des Dampferzeugers angeordneten ersten Wärmetauscher und einem außerhalb des Dampferzeugers angeordneten zweiten Wärmetauscher sowie einen der Parallelschaltung nachgeschalteten innerhalb des Dampferzeugers angeordneten Economizer umfaßt Dabei ist die Mtteldruck-Heizeinrichtung der Parallelschaltung aus dem ersten Wärmetauscher und dem zweiten Wärmetauscher nachgeschaltet. Sie kann außerdem der Vorwärmstufe der Zwischenüberhitzer-Einrichtung nachgeschaltet und der Endüberhitzerstufe der Zwischenüberhitzer-Einrichtung vorgeschaltet sein. Dadurch wird eine besonders vorteilhafte Ausnutzung der Wärme im Dampferzeuger erreicht.

Gemäß einer weiteren vorteilhaften Ausgestaltung der erfindungsgemäßen Anlage ist diese so ausgebildet, daß die Mitteldruck-Heizeinrichtung und die Hochdruck-Heizeinrichtung jeweils eine Vorwärmstufe und eine der Vorwärmstufe nachgeschaltete Überhitzerstufe umfassen.

Die mit der Erfindung erzielten Vorteile bestehen insbesondere darin, daß durch Verwendung einer Mitteldruck-Heizeinrichtung - in Strömungsrichtung der Rauchgase gesehen - örtlich im Dampferzeuger vor der Vorwärmeinrichtung eine zusätzliche Wärmesenke für die heißen Rauchgase geschaffen wird. Dadurch wird einerseits bei einer Verminderung der in den Wasser-Dampf-Kreislauf eingeleiteten Wassermenge im Teillastbereich ein Ausdampfen der Heizflächen der Vorwärmeinrichtung, insbesondere der Economizer-Heizflächen, sicher verhindert Andererseits kann durch Einleiten eines Teils der Abgase aus der Gasturbine in die Primärseite des Dampferzeugers die mit dem Abgas in den Dampferzeuger eingebrachte Wärmemenge zusätzlich zur Dampferzeugung herangezogen werden, so daß sowohl im Teillastbereich als auch im Vollastbereich der Wirkungsgrad des Dampfprozesses und damit der Gesamtwirkungsgrad der Anlage verbessert ist. Eine derartige Anlage kann vorteilhafterweise mit einer marktüblichen Gasturbine betrieben werden, deren Abgasmenge größer als die bei Nennlastbetrieb benötigte Abgasmenge ist.

Zur näheren Erläuterung der Erfindung wird anhand einer Zeichnung ein Ausführungsbeispiel beschrieben. Darin zeigen:
- FIG. 1: eine schematische Darstellung einer Anordnung und Schaltung einer erfindungsgemäßen Mitteldruck-Heizeinrichtung im Dampferzeuger einer kombinierten Gas- und Dampfturbinenanlage, und
- FIG. 2: eine Variante der Mitteldruck-Heizeinrichtung im Dampferzeuger aus Figur 1.

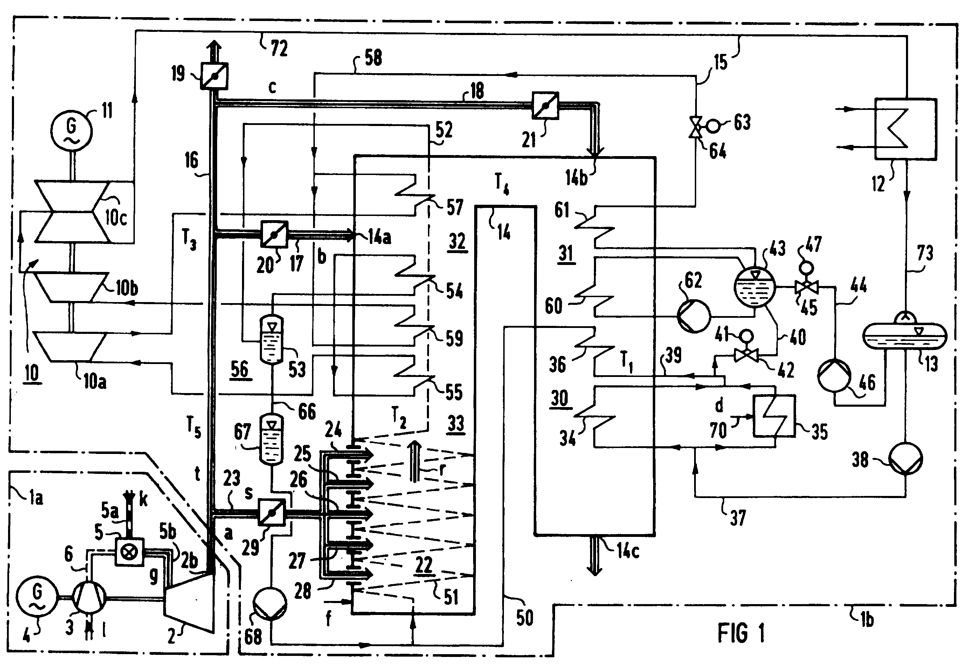

Die Gas- und Dampfturbinenanlage gemäß Figur 1 umfaßt eine Gasturbinenanlage 1a und eine Dampfturbinenanlage 1b. In der Gasturbinenanlage 1a sind eine Gasturbine 2 mit angekoppeltem Luftverdichter 3 und ein Generator 4 sowie eine der Gasturbine 2 vorgeschaltete Brennkammer 5 vorgesehen, die an die Frischluftleitung 6 des Luftverdichters 3 angeschlossen ist.

In der Dampfturbinenanlage 1b ist eine Dampfturbine 10 mit angekoppeltem Generator 11 vorgesehen, weiterhin ein der Dampfturbine 10 nachgeschalteter Kondensator 12 und ein dem Kondensator 12 nachgeschalteter Speisewasserbehälter 13 sowie ein Dampferzeuger 14. Der Wasser-Dampf-Kreislauf der Dampfturbine 10 ist allgemein mit 15 bezeichnet.

Der Ausgang 2b der Gasturbine 2 ist an eine Abgasleitung 16 angeschlossen. Der Gasturbine 2 ist abgasseitig eine Feuerungsanlage 22 nachgeschaltet, die im Ausführungsbeispiel innerhalb des Dampferzeugers 14 angeordnet ist Dazu ist an die Abgasleitung 16 ein Zweig 23 angeschlossen, der über Zuführleitungen 24 bis 28 in die Feuerungsanlage 22 mündet.

In den Zweig 23 ist eine Klappe 29 geschaltet. Die Feuerungsanlage 22 umfaßt beispielsweise - wie durch die Zuführleitungen 24 bis 28 angedeutet ist - in fünf übereinander angeordneten Ebenen insgesamt zwanzig nicht dargestellte Brenner, wobei jeder Ebene jeweils vier Brenner zugeordnet sind.

Zum Zuführen eines Teils t der Abgase a aus der Gasturbine 2 in den Dampferzeuger 14 ist eine erste Teilstromleitung 17 an einen Eingang 14a und eine zweite Teilstromleitung 18 an einen Eingang 14b des Dampferzeugers 14 angeschlossen. In die Abgasleitung 16 sowie in die Teilstromleitungen 17 und 18 sind Klappen 19, 20 bzw. 21, beispielsweise Drosselklappen oder andere Regelorgane, geschaltet. Die Klappen 19, 20 bzw. 21 können dabei von nicht dargestellten Motoren betätigt werden.

Der Dampferzeuger 14 umfaßt eine Vorwärmeinrichtung 30, eine Mitteldruck-Heizeinrichtung 31, eine Zwischenüberhitzer-Einrichtung 32 und eine Hochdruck-Heizeinrichtung 33.

Die Vorwärmeinrichtung 30 umfaßt einen innerhalb des Dampferzeugers 14 angeordneten ersten Wärmetauscher 34, einen diesem außerhalb des Dampferzeugers 14 parallel geschalteten zweiten Wärmetauscher 35 sowie einen Economizer 36. Die Wärmetauscher 34 und 35 sind über eine gemeinsame Zuströmleitung 37, in der eine Pumpe 38 liegt, an den Speisewasserbehälter 13 angeschlossen. Die Wärmetauscher 34 und 35 sind über eine gemeinsame Abströmleitung 39 an den Economizer 36 angeschlossen. Sie sind außerdem über einen Zweig 40, in den ein von einem Motor 41 betätigbares Ventil 42 geschaltet ist, an einen Wasser-Dampf-Behälter 43 angeschlossen.

Der Wasser-Dampf-Behälter 43 kann auch über eine Leitung 44, in der ein Ventil 45 und eine Pumpe 46 vorgesehen sind, direkt mit dem Speisewasserbehälter 13 verbunden sein. Das Ventil 45 ist von einem Motor 47 betätigbar.

Die Hochdruck-Heizeinrichtung 33 ist eingangsseitig über eine Leitung 50 an den Economizer 36 angeschlossen. Sie umfaßt eine mantelseitig im Dampferzeuger 14 im Bereich der Feuerungsanlage 22 angeordnete Rohranordnung 51, die ausgangsseitig über eine Leitung 52 an ein Trenngefäß 53 angeschlossen ist. Die Hochdruck-Heizeinrichtung 33 umfaßt außerdem eine Vorwärmstufe 54 und eine dieser nachgeschaltete Überhitzerstufe 55. Die Vorwärmstufe 54 ist eingangsseitig an das Trenngefäß 53 angeschlossen. Die Überhitzerstufe 55 ist ausgangsseitig an einen Hochdruckteil 10a der Dampfturbine 10 angeschlossen. Die Hintereinanderschaltung aus der Vorwärmeinrichtung 30 und der Hochdruck-Heizeinrichtung 33 sowie des Hochdruckteils 10a der Dampfturbine 10 bildet eine Hochdruckstufe 56.

Die Zwischenüberhitzer-Einrichtung 32 umfaßt eine Vorwärmstufe 57, die ausgangsseitig mit einer Leitung 58 verbunden ist, und eine Endüberhitzerstufe 59, die eingangsseitig mit der Leitung 58 verbunden ist.

Die Mtteldruck-Heizeinrichtung 31 umfaßt eine Verdampfer- oder Vorwärmstufe 60 und eine Überhitzerstufe 61. Die Vorwärmstufe 60 ist eingangsseitig über eine Umwälzpumpe 62 an den Wasser-Dampf-Behälter 43 angeschlossen. Der Wasser-Dampf-Behälter 43 ist dampfseitig sowohl an die Vorwärmstufe 60 als auch an die Überhitzerstufe 61 angeschlossen. Die Überhitzerstufe 61 ist ausgangsseitig über die Leitung 58, in die ein von einem Motor 63 betätigbares Ventil 64 geschaltet ist, mit der Überhitzer-Einrichtung 32 verbunden; die Mitteldruck-Heizeinrichtung 31 ist somit der Hintereinanderschaltung aus dem Economizer 36 und der HochdruckHeizeinrichtung 33 sowie dem Hochdruckteil 10a der Dampfturbine 10 parallel geschaltet. Dabei wird der in der Mitteldruck-Heizeinrichtung 31 benötigte Druck über das Ventil 42 eingestellt. Die Mitteldruck-Heizeinrichtung kann aber auch über die Leitung 44 direkt an den Speisewasserbehälter 13 angeschlossen sein. Sie bleibt dann der Hochdruckstufe 56 parallel geschaltet. Bei dieser Ausführungsform bringt die Pumpe 46 das Speisewasser auf den erforderlichen Druck.

Der Hochdruckteil 10a der Dampfturbinenanordnung 10 ist ausgangsseitig an die Vorwärmerstufe 57 der Zwischenüberhitzer-Einrichtung 32 angeschlossen. Die Endüberhitzerstufe 59 der Zwischenüberhitzer-Einrichtung 32 ist ausgangsseitig an einen Mitteldruckteil 10b der Dampfturbinenanordnung 10 angeschlossen. Der Mitteldruckteil 10b ist an einen Niederdruckteil 10c der Dampfturbinenanordnung 10 angeschlossen. Der Niederdruckteil 10c ist ausgangsseitig an den Kondensator 12 angeschlossen.

Beim Betrieb der kombinierten Gas- und Dampfturbinenanlage 1 wird der Brennkammer 5 in nicht näher dargestellter Art und Weise Kohle k oder ein anderer Brennstoff, z.B. Öl oder Gas, über eine Zuführleitung 5a zugeführt. Die Kohle k wird in der Brennkammer 5 mit der verdichteten Frischluft 1 aus dem Luftverdichter 3 verbrannt. Das bei der Verbrennung entstehende heiße Rauchgas g wird über eine Rauchgasleitung 5b in die Gasturbine 2 geleitet. Dort entspannt es sich und treibt dabei die Gasturbine 2 an, die wiederum den Luftverdichter 3 und den Generator 4 antreibt Die aus der Gasturbine 2 austretenden heißen Abgase a werden über den Zweig 23 als Verbrennungsluft s und über die Zufuhrleitungen 24 bis 28 in die Feuerungsanlage 22 des Dampferzeugers 14 geleitet Der für die Verbrennung in der Feuerungsanlage 22 nicht benötigte Teil t der heißen Abgase a wird über die Zweige 17 und 18 in den Dampferzeuger 14 eingeleitet. Dabei wird ein erster Teilstrom b bevorzugt zwischen die Vorwärmstufe 57 und die Endüberhitzerstufe 59 der Zwischenüberhitzer-Einrichtung 32 geführt. Ein zweiter Teilstrom c wird über den Zweig 18 - in Strömungsrichtung der in der Feuerungsanlage 22 erzeugten Rauchgase r gesehen - örtlich hinter der Zwischenüberhitzer-Einrichtung 32 in den Dampferzeuger 14 geführt Das Mengenverhältnis der beiden Teilströme b und c ist über die Klappen 20 bzw. 21 einstellbar. Ein möglicherweise für die Dampferzeugung nicht benötigter Teil t der heißen Abgase a wird über die Klappe 19 in Richtung auf einen (nicht dargestellten) Kamin abgeführt.

Das Speisewasser aus dem Speisewasserbehälter 13 wird über die Pumpe 38 in die Vorwärmeinrichtung 30 gepumpt und durchströmt die Wärmetauscher 34 und 35 sowie den Economizer 36. Das Speisewasser wird in der Vorwärmstufe 30 auf eine Temperatur T1, die bei etwa 330° C liegt, aufgewärmt. Eine mit dem Ventil 42 einstellbare Teilmenge des Speisewassers strömt über den Zweig 40 in den Wasser-Dampf-Behälter 43. Zur Aufwärmung des Speisewassers im Wärmetauscher 35 wird diesem heißer Dampf d in nicht näher dargestellter Art und Weise aus der Dampfturbine 10 über eine Leitung 70 zugeführt Alternativ kann über die Leitung 44 Speisewasser unter Umgehung der Vorwärmeinrichtung 30 direkt in den Wasser-Dampf-Behälter 43 gepumpt werden.

Das in der Vorwärmeinrichtung 30 vorgewärmte Speisewasser strömt über die Leitung 50 in die Hochdruck-Heizeinrichtung 33. Dabei durchströmt es die vom heißen Rauchgas r aus der Feuerungsanlage 22 beheizte Rohranordnung 51 und wird dabei aufgeheizt, verdampft und überhitzt Die Temperatur T2 des Rauchgases r aus der Feuerungsanlage 22 liegt bei etwa 1100° C. Der überhitzte Dampf, in dem noch Naßdampf enthalten sein kann, strömt anschliessend über die Leitung 52 in das Trenngefäß 53. Dort wird der Dampf vom Wasser getrennt. Der Dampf strömt über die Vorwärmstufe 54 und die überhtzerstufe 55 der Hochdruck-Heizeinrichtung 33 in den Hochdruckteil 10a der Dampfturbine 10. Das Wasser wird über eine Leitung 66, in der ein Sammelgefäß 67 und eine Pumpe 68 liegen, in die Leitung 50 eingespeist. Der Abdampf des Hochdruckteils 10a strömt mit einer Temperatur T3, die bei etwa 400° C liegt, durch die Vorwärmstufe 57 und die Endüberhitzerstufe 59 der Zwischenüberhitzer-Einrichtung 32. Er wird dort erneut aufgeheizt und strömt anschließend in den Mitteldruckteil 10b der Dampfturbine 10. Der Abdampf aus dem Mitteldruckteil 10b strömt in den Niederdruckteil 10c der Dampfturbine 10 und von dort über eine Leitung 72 in den Kondensator 12; er wird dort kondensiert. Das Kondensat strömt aus dem Kondensator 12 über eine Leitung 73 in den Speisewasserbehälter 13.

Die Temperatur der heißen Rauchgase r aus der Feuerungsanlage 22 beträgt im Bereich der Zwischenüberhitzer-Einrichtung 32 und der Mitteldruck-Heizeinrichtung 31 noch etwa 400° C. Durch Zumischen von heißem Abgas a aus der Gasturbine 2 - dessen Temperatur T5 etwa 500° C beträgt - über die Teilstromleitungen 17 und 18 stellt sich im Bereich der Zwischenüberhitzer-Einrichtung 32 und der Mitteldruck-Heizeinrichtung 31 innerhalb des Dampferzeugers 14 eine Mischtemperatur T4 ein. Die Mischtemperatur T4 liegt etwa bei 450° C. Das Abgas a der beiden Teilströme b und c sowie das Rauchgas r verlassen den Dampferzeuger 14 über dessen Ausgang 14c in Richtung auf den (nicht dargestellten) Kamin.

Das Speisewasser im Wasser-Dampf-Behälter 43 wird über die Pumpe 62 durch die Vorwärmstufe 60 der Mitteldruck-Heizeinrichtung 31 und von dort zurück in den Wasser-Dampf-Behälter 43 gepumpt Dabei wird das Speisewasser aufgeheizt und gelangt als Dampf in die Überhitzerstufe 61 der Mitteldruck-Heizeinrichtung 31. Der Dampf strömt über die Leitung 58 zusammen mit dem in der Vorwärmstufe 57 der Zwischenüberhitzer-Einrichtung 32 aufgeheizte Abdampf aus dem Hochdruckteil 10a der Dampfturbine 10 in die Endüberhitzerstufe 59 der Zwischenüberhitzer-Einrichtung 32 und von dort in den Mitteldruckteil 10b der Dampfturbine 10. Dabei ist die über die Leitung 58 strömende Dampfmenge aus der Mitteldruck-Heizeinrichtung 31 mit dem Ventil 64 einstellbar.

Bei Vollastbetrieb wird durch die erfindungsgemäß zusätzlich vorgesehene Mitteldruck-Heizeinrichtung 31 und durch die mit den Teilströmen b und c zusätzlich in den Dampferzeuger 14 eingebrachte Wärmemenge eine zusätzliche Dampfmenge in den Mitteldruckteil 10b der Dampfturbinenanordnung 10 eingebracht. Dadurch wird der Wirkungsgrad des Dampferzeugers 14 erhöht.

Bei Teillastbetrieb wird üblicherweise die Menge des der Feuerungsanlage 22 zugeführten Brennstoffs f pro Zeiteinheit vermindert. Demzufolge wird auch die Menge der Verbrennungsluft s für die Feuerungsanlage 22 reduziert, so daß eine entsprechend größere Teilmenge des Abgases a über die Teilstromleitungen 17 und 18 in den Dampferzeuger 14 einleitbar ist. Durch die Verminderung der Brennstoffzufuhr in die Feuerungsanlage 22 wird weniger Rauchgas r produziert, so daß entsprechend weniger Dampf für den Hochdruckteil 10a der Dampfturbine 10 erzeugt wird. Außerdem sinkt durch eine Verminderung der Dampfmenge im Wasser-Dampf-Kreislauf 15 sowohl die Temperatur als auch der Druck im Mitteldruckteil 10b der Dampfturbine 10. Um ein Ausdampfen der Heizflächen des Economizers 36 zu verhindern, mußte bisher die Abgasmenge oder die Abgastemperatur der Gasturbine 2 reduziert und gegebenenfalls die Zwischenüberhitzer-Einrichtung 32 mit Hilfe einer externen Kühlung abgekühlt werden. Dies bringt allerdings nachteiligerweise eine Verminderung des Gesamtwirkungsgrades der Anlage 1 mit sich.

Demgegenüber wird durch die erfindungsgemäß zusätzlich vorgesehene Mitteldruck-Heizeinrichtung 31 - in Strömungsrichtung der Rauchgase rund der Abgase a gesehen - örtlich vor dem Economizer 36 eine Wärmesenke geschaffen. Dadurch wird dem Rauchgas r und dem gegebenenfalls zusätzlich eingeleiteten Abgas a zusätzlich Wärme entzogen, so daß ein Ausdampfen der Heizflächen des Economizers 36 sicher verhindert wird. Außerdem wird durch den in der Mitteldruck-Heizeinrichtung 31 zusätzlich erzeugten Dampf die den Mitteldruckteil 10b der Dampfturbinenanordnung 10 durchströmende Dampfmenge erhöht, so daß die Überhitzer-Einrichtung 32 auch im Teillastbereich mit einer großen Abgasmenge aus der Gasturbine 2 über die Teilstromleitung 17 beaufschlagt und dabei ohne Kühlung betrieben werden kann. Dabei wird die Mischtemperatur T4 in der Überhitzer-Einrichtung 32 über eine Steuerung oder Regelung der Mengen der Teilströme b und c sowie der Dampfmenge aus der Mitteldruck-Heizeinrichtung 31 konstant gehalten.

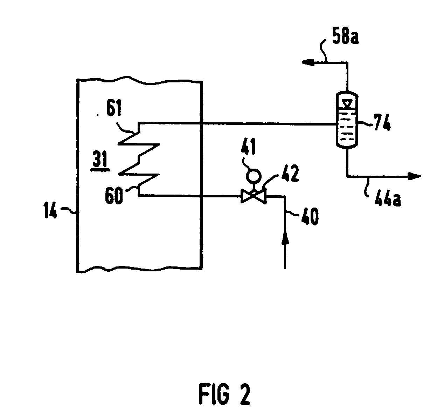

In Figur 2 ist ein Variante der Mitteldruck-Heizeinrichtung 31 im Dampferzeuger 14 aus Figur 1 gezeigt. Dabei ist die Überhitzerstufe 61 der Vorwärmstufe 60 innerhalb des Dampferzeugers 14 direkt nachgeschaltet. Die Überhitzerstufe 61 ist ausgangsseitig an ein Wasser-Dampf-Trenngefäß 74 angeschlossen. Das in der Vorwärmstufe 60 vorgewärmte und anschließend in der Überhitzerstufe 61 überhitzte Speisewasser strömt in das Wasser-Dampf-Trenngefäß 74. Dort wird der Dampf vom Wasser getrennt. Der Dampf strömt, wie oben beschrieben, über eine Leitung 58a in die Zwischenüberhitzer-Einrichtung 32. Das Wasser wird über eine Leitung 44a in den Speisewasserbehälter 13 eingeleitet.

## Patentansprüche

1. Kombinierte Gas- und Dampfturbinenanlage mit einem der Gasturbine (2) abgasseitig nachgeschalteten Dampferzeuger (14), der eine Feuerungsanlage (22) und in den Wasser-Dampf-Kreislauf (15) der Dampfturbine (10) geschaltet eine Vorwärmeinrichtung (30) und eine der Vorwärmeinrichtung (30) nachgeschaltete Hochdruck-Heizeinrichtung (33) einer Hochdruckstufe (56) der Dampfturbine (10) sowie eine der Hochdruckstufe (56) nachgeschaltete Zwischenüberhitzer-Einrichtung (32) umfaßt, wobei eine parallel zur Hochdruckstufe (56) der Dampfturbine (10) geschaltete Mitteldruck-Heizeinrichtung (31), die - in Strömungsrichtung der Rauchgase (r) gesehen - örtlich im Dampferzeuger (14) zwischen der Hochdruck-Heizeinrichtung (33) und der Vorwärmeinrichtung (30) angeordnet ist, **dadurch gekennzeichnet**, daß die Mitteldruck-Heizeinrichtung (31) ausgangsseitig in die Zwischenüberhitzer-Einrichtung (32) mündet.

2. Kombinierte Gas- und Dampfturbinenanlage nach Anspruch 1, **dadurch gekennzeichnet**, daß die Mitteldruck-Heizeinrichtung (31) parallel zur Hintereinanderschaltung aus der Vorwärmeinrichtung (30) und der Hochdruck-Heizeinrichtung (33) sowie eines Hochdruckteils (10a) der Dampfturbine (10) geschaltet ist.

3. Kombinierte Gas- und Dampfturbinenanlage nach Anspruch 2, **dadurch gekennzeichnet**, daß in einer Zuströmleitung (44) für Speisewasser der Mitteldruck-Heizeinrichtung (31) eine Pumpe (46) vorgesehen ist.

4. Kombinierte Gas- und Dampfturbinenanlage nach einem der Ansprüche 1 bis 3, **dadurch gekennzeichnet**, daß mindestens ein Teil (t) der Abgase (a) aus der Gasturbine (2) unter Umgehung der Feuerungsanlage (22) direkt in den Dampferzeuger (14) einleitbar ist.

5. Kombinierte Gas- und Dampfturbinenanlage nach 4, **dadurch gekennzeichnet,** daß - in Strömungsrichtung der Rauchgase (r) gesehen - örtlich hinter der Zwischenüberhitzer-Einrichtung (32) in den Dampferzeuger (14) ein Teilstrom (c) der Abgase (a) aus der Gasturbine (2) einleitbar ist.

6. Kombinierte Gas- und Dampfturbinenanlage nach Anspruch 5, **dadurch gekennzeichnet,** daß - in Strömungsrichtung der Rauchgase (r) gesehen - örtlich vor der Zwischenüberhitzer-Einrichtung (32) in den Dampferzeuger (14) ein Teilstrom (b) der Abgase (a) aus der Gasturbine (2) einleitbar ist.

7. Kombinierte Gas- und Dampfturbinenanlage nach Anspruch 5, **dadurch gekennzeichnet**, daß die Zwischenüberhitzer-Einrichtung (32) eine Vorwärmstufe (57) und eine dieser nachgeschaltete Endüberhitzerstufe (59) umfaßt, und daß in den Dampferzeuger (14) ein Teilstrom (b) der Abgase (a) aus der Gasturbine (2) zwischen die Vorwärmstufe (57) und die Endüberhitzerstufe (59) einleitbar ist.

8. Kombinierte Gas- und Dampfturbinenanlage nach einem der Ansprüche 1 bis 7, **dadurch gekennzeichnet**, daß die Vorwärmeinrichtung (30) eine Parallelschaltung aus einem innerhalb des Dampferzeugers (14) angeordneten ersten Wärmetauscher (34) und einen außerhalb des Dampferzeugers (14) angeordneten zweiten Wärmetauscher (35) sowie einen der Parallelschaltung nachgeschalteten innerhalb des Dampferzeugers (14) angeordneten Economizer (36) umfaßt.

9. Kombinierte Gas- und Dampfturbinenanlage nach Anspruch 8, **dadurch gekennzeichnet,** daß die Mitteldruck-Heizeinrichtung (31) der Parallelschaltung aus dem ersten Wärmetauscher (34) und dem zweiten Wärmetauscher (35) nachgeschaltet ist.

10. Kombinierte Gas- und Dampfturbinenanlage nach einem der Ansprüche 1 bis 9, **dadurch gekennzeichnet**, daß die Mitteldruck-Heizeinrichtung (31) eine Vorwärmstufe (60) und eine der Vorwärmstufe (60) nachgeschaltete Überhitzerstufe (61) umfaßt.

11. Kombinierte Gas- und Dampfturbinenanlage nach einem der Ansprüche 1 bis 10, **dadurch gekennzeich**net, daß die Hochdruck-Heizeinrichtung (33) eine Vorwärmstufe (54) und eine dieser nachgeschaltete Überhitzerstufe (55) umfaßt.

12. Kombinierte Gas- und Dampfturbinenanlage nach einem der Ansprüche 5 bis 11, **dadurch gekennzeichnet**, daß die Mitteldruck-Heizeinrichtung (31) der Vorwärmstufe (57) der Zwischenüberhitzer-Einrichtung (32) nachgeschaltet und der Endüberhitzerstufe (59) der Zwischenüberhitzer-Einrichtung (32) vorgeschaltet ist.

## Claims

1. A combined gas and steam turbine system with a steam generator (14), which is connected downstream of the exhaust gas side of the gas turbine (2) and comprises a firing system (22), a preheater (30) incorporated into the water/steam circuit (15) of the steam turbine (10), a high-pressure heater (33) of a high-pressure stage (56) of the steam turbine (10) connected downstream of the preheater (30), and an intermediate superheater (32) connected downstream of the high-pressure stage (56), wherein a medium-pressure heater (31), which is connected parallel to the high-pressure stage (56) of the steam turbine (10), is arranged locally in the steam generator (14) between the high-pressure heater (33) and the preheater (30), as seen in the given flow direction of the flue gases (r), characterised in that the medium-pressure heater (31) discharges on the outlet side into the intermediate superheater (32).

2. A combined gas and steam turbine system according to claim 1, characterised in that the medium-pressure heater (31) is connected parallel to the series circuit arrangement comprising the preheater (30), the high-pressure heater (33) and a high-pressure part (10a) of the steam turbine (10).

3. A combined gas and steam turbine system according to claim 2, characterised in that a pump (46) is provided in an inflow line (44) for supplying feedwater to the medium-pressure heater (31).

4. A combined gas and steam turbine system according to one of claims 1 to 3, characterised in that at least one part (t) of the exhaust gases (a) from the gas turbine (2) can be introduced directly into the steam generator (14), bypassing the firing system (22).

5. A combined gas and steam turbine system according to claim 4, characterised in that a partial stream (c) of the exhaust gases (a) from the gas turbine (2) can be introduced into the steam generator (14) locally downstream of the intermediate superheater (32), as seen in the given flow direction of the flue gases (r).

6. A combined gas and steam turbine system according to claim 5, characterised in that a partial stream (b) of the exhaust gases (a) from the gas turbine (2) can be introduced into the steam generator (14) locally upstream of the intermediate superheater (32), as seen in the given flow direction of the flue gases (r).

7. A combined gas and steam turbine system according to claim 5, characterised in that the intermediate superheater (32) comprises a preheater stage (57) and a final superheater stage (59) connected downstream of said preheater stage (57), and in that a partial stream (b) of the exhaust gases (a) from the gas turbine (2) can be introduced into the steam generator (14) between the preheater stage (57) and the final superheater stage (59).

8. A combined gas and steam turbine system according to one of claims 1 to 7, characterised in that the preheater (30) comprises a parallel circuit arrangement having a first heat exchanger (34) disposed inside the steam generator (14) and a second heat exchanger (35) disposed outside the steam generator (14), and an economizer (36) disposed inside the steam generator (14) and connected downstream of said parallel circuit arrangement.

9. A combined gas and steam turbine system according to claim 8, characterised in that the medium-pressure heater (31) is connected downstream of the parallel circuit arrangement comprising the first heat exchanger (34) and the second heat exchanger (35).

10. A combined gas and steam turbine system according to one of claims 1 to 9, characterised in that the medium-pressure heater (31) comprises a preheater stage (60) and a superheater stage (61) connected downstream of the preheater stage (60).

11. A combined gas and steam turbine system according to one of claims 1 to 10, characterised in that the high-pressure heater (33) comprises a preheater stage (54) and a superheater stage (55) connected downstream of the preheater stage (54).

12. A combined gas and steam turbine system according to one of claims 5 to 11, characterised in that the medium-pressure heater (31) is connected downstream of the preheater stage (57) of the intermediate superheater (32) and upstream of the final superheater stage (59) of the intermediate superheater (32).

## Revendications

1. Installation combinée à turbines à gaz et à vapeur, comportant un générateur de vapeur (14) branché en aval de la turbine à gaz (1), côté gaz d'échappement et comprenant une installation à foyer (22) et, montés dans le circuit de vapeur d'eau (15) de la turbine à vapeur (10), un dispositif de préchauffage (30) et un dispositif de chauffage à haute pression (33), branché en aval du dispositif de préchauffage (30), d'un étage à haute pression (56) de la turbine à vapeur (10) ainsi qu'un surchauffeur intermédiaire (32) branché en aval de l'étage à haute pression (56), un dispositif de chauffage à moyenne pression (31), étant branché en parallèle avec l'étage à haute pression (56) de la turbine à vapeur (10) et étant disposé dans le générateur de vapeur (14) entre le dispositif de chauffage à haute pression (33) et le dispositif de préchauffage (30), lorsqu'on regarde dans la direction d'écoulement des gaz de fumée (r), caractérisé en ce que le dispositif de chauffage à moyenne pression (31) débouche du côté de la sortie dans le surchauffeur intermédiaire (32).

2. Installation combinée à turbines à gaz et à vapeur suivant la revendication 1, caractérisée par le fait que le dispositif de chauffage à moyenne pression (31) est branché en parallèle avec le montage en série comprenant le dispositif de préchauffage (30) et le dispositif de chauffage à haute pression (33) ainsi qu'une partie à haute pression (10a) de la turbine à vapeur (10).

3. Installation combinée à turbines à gaz et à vapeur suivant la revendication 2, caractérisée par le fait qu'une pompe (46) est prévue dans une canalisation d'alimentation (44) pour l'eau d'alimentation du dispositif de chauffage à moyenne pression (31).

4. Installation combinée à turbines à gaz et à vapeur suivant l'une des revendications 1 à 3, caractérisée par le fait qu'au moins une partie (t) des gaz d'échappement (a) peut être introduite, à partir de la turbine à gaz (2), directement dans le générateur de vapeur (14) en contournant l'installation à foyer (22).

5. Installation combinée à turbines à gaz et à vapeur suivant la revendication 4, caractérisée par le fait que un courant partiel (c) des gaz d'échappement (a) sortant de la turbine à gaz (2) peut être introduit dans le générateur de vapeur (14) en aval du surchauffeur intermédiaire (32), lorsqu'on regarde dans la direction d'écoulement des gaz de fumée (r).

6. Installation combinée à turbines à gaz et à vapeur suivant la revendication 5, caractérisée par le fait qu'un courant partiel (b) des gaz d'échappement (a) sortant de la turbine à gaz (2) peut être introduit dans le générateur de vapeur (32) en amont du surchauffeur intermédiaire (32), lorsqu'on regarde dans la direction d'écoulement des gaz de fumée (r).

7. Installation combinée à turbines à gaz et à vapeur suivant la revendication 5, caractérisée par le fait que le surchauffeur intermédiaire (32) comprend un étage de préchauffage (57) et un étage final formant surchauffeur (59) branché en aval de l'étage de préchauffage, et qu'un courant partiel (b) des gaz d'échappement (a) sortant de la turbine à gaz (2) peut être introduit dans le générateur de vapeur (14), entre l'étage de préchauffage (57) et l'étage final formant surchauffeur (59).

8. Installation combinée à turbines à gaz et à vapeur suivant l'une des revendications 1 à 7, caractérisée par le fait que le dispositif de préchauffage (30) comprend un circuit parallèle formé par un premier échangeur de chaleur (34), disposé à l'intérieur du générateur de vapeur (14), et par un second échangeur de chaleur (35), disposé à l'extérieur du générateur de vapeur (14), ainsi qu'un économiseur (36) branché en aval du circuit en parallèle, à l'intérieur du générateur de vapeur (14).

9. Installation combinée à turbines à gaz et à vapeur suivant la revendication 8, caractérisée par le fait que le dispositif de chauffage à moyenne pression (31) est branché en aval du circuit parallèle formant le premier échangeur de chaleur (34) et le second échangeur de chaleur (35).

10. Installation combinée à turbines à gaz et à vapeur suivant l'une des revendications 1 à 9, caractérisée par le fait que le dispositif de chauffage à moyenne pression (31) comprend un étage de préchauffage (60) et un étage formant surchauffeur (61) branché en aval de l'étage de préchauffage (60).

11. Installation combinée à turbines à gaz et à vapeur suivant l'une des revendications 1 à 10, caractérisée par le fait que le dispositif de chauffage à haute pression (33) comprend un étage de préchauffage (54) et un étage formant surchauffeur (55) branché en aval de cet étage de préchauffage.

12. Installation combinée à turbines à gaz et à vapeur suivant l'une des revendications 5 à 11, caractérisée par le fait que le dispositif de chauffage à moyenne pression (31) est branché en aval de l'étage de préchauffage (57) du surchauffeur intermédiaire (32) et est branché en amont de l'étage final formant surchauffeur (52) du surchauffeur intermédiaire (32).
